# EUROPÄISCHE PATENTSCHRIFT

(11) **EP 2 611 317 B1**
(45) Veröffentlichungstag und Bekanntmachung des Hinweises auf die Patenterteilung: **17.12.2014**
(21) Anmeldenummer: 11748257.0
(22) Anmeldetag: 21.07.2011
(51) Int. Cl.: A41D 27/02, A41D 27/06, C09J 133/00, C09J 167/00, C09J 177/00, D06M 17/00, D06M 17/04, C09J 125/14, C09J 133/04

(54) **KLEBEMASSE FÜR HEISSSIEGELFÄHIGE EINLAGEN**
ADHESIVE COMPOSITION FOR HOT MELTABLE INTERLININGS
COMPOSITION ADHÉSIVE POUR DES REVÊTEMENTS D'ENTOILAGE THERMOFUSIBLES

(30) Priorität: 02.09.2010 DE 102010044265
(43) Veröffentlichungstag der Anmeldung: 10.07.2013
(73) Patentinhaber: Carl Freudenberg KG, 69469 Weinheim (DE)
(72) Erfinder: BARTL, Heike, 69469 Weinheim (DE); KINSCHERF, Cornelia, 69509 Mörlenbach (DE); STAUDENMAYER, Oliver, 69469 Weinheim (DE); SCHERBEL, Ulrich, 81825 München (DE)
(86) Internationale Anmeldenummer: PCT/EP2011/003651
(87) Internationale Veröffentlichungsnummer: WO 2012/028229

(56) Entgegenhaltungen:
- EP-A1- 0 481 109
- EP-A2- 0 445 395
- DE-A1- 19 823 926
- DE-B3-102008 012 160
- JP-A- 54 018 963

## Beschreibung

Die Erfindung betrifft eine Klebemasse für eine heißsiegelfähige Einlage und eine mit dieser Klebemasse ausgestattete Einlage sowie ein Verfahren zur Fixierung der Einlage.

Verklebbare textile Einlagestoffe, die auch als Fixiereinlagen oder Heißsiegeleinlagen bezeichnet werden, werden hauptsächlich in Bekleidungen aller Art eingesetzt und dort zur Formgebung und/oder Stabilisierung von textilen Flächengebilden, wie beispielsweise textile Oberstoffen, verwendet.

Fixiereinlagen sind textile Flächengebilde, wie Gewebe, Gewirke oder Vliesstoffe mit einer aufgebrachten heißsiegelfähigen thermoplastischen Klebemasse, die mit einem anderen textilen Flächengebilde nach Einwirkung von Temperatur, Druck und Zeit eine haftende und dauerhafte Verbindung mit entsprechenden Gebrauchsechtheiten eingehen. So soll die Verbindung mit einem mit einer Fixiereinlage fixierten Bekleidungsstück die übliche Pflegebehandlungsprozeße, Haushaltswäsche und chemische Reinigung überdauern und danach noch wirksam haften. Die Klebemasse soll beim Fixieren außerdem nicht auf die Außenseite des Oberstoffes durchschlagen und dort nicht sichtbar und spürbar sein, da dies zu einer unzureichenden Optik und Haptik des fixierten Textils führt.

Gebräuchliche Schmelzkleber für Fixiereinlagen und Verfahren zum Auftrag der Schmelzkleber auf den Einlageträgerstoff sind beispielsweise in Sroka: Handbuch der textilen Fixiereinlagen, 3. erweitere Auflage, Hartung-Gorre Verlag Konstanz, S. 178 bis 254, 1993, beschrieben. Die für Fixiereinlagen am meisten genutzten Auftragsverfahren für Klebemassen sind Pastenpunkt-, Pulverpunkt- und Doppelpunktbeschichtung. Die Heißsiegelfähigkeit der in diesen Verfahren eingesetzten Klebemassen wird durch pulverförmige Schmelzkleber, üblicherweise Co-Polyamide, Co-Polyester und Polyolefine erreicht. Die Verklebung dieser Klebemassen mit textilen Oberstoffen erfolgt unter Einwirkung von Druck und Hitze über einen vorherbestimmten Zeitraum. Die Parameter sind in gewissen Grenzen frei wählbar. Im allgemeinen liegen die Fixiertemperaturen im Bereich von 60°C bis 165°C. Um eine Beschädigung des textilen Oberstoffes zu vermeiden, sind höhere Fixiertemperaturen nicht empfehlenswert. Die Fixierung erfolgt mit bekannten Fixieraggregaten, wie einem Preßverfahren, beispielsweise Durchlauf- oder Plattenpressen oder mit einem Bügeleisen. Die Fixierzeit, in der die Temperatureinwirkung erfolgt, liegt im allgemeinen im Bereich von 5 s bis 120 s. Der Druck liegt in der Regel im Bereich von 0 N/m² bis 8x10⁵ N/m². Die für die Fixierung von Heißsiegeleinlagen relevanten Parameter Temperatur, Zeit, Druck und Aggregat werden als Fixierkonditionen bezeichnet.

Durch die modischen Entwicklungen gibt es auf dem Markt eine Reihe von Oberstoffen, die mit den bekannten mit üblichem Schmelzkleber ausgestatteten Fixiereinlagen nicht in zufriedenstellender Weise fixierbar sind.

Als schwer fixierbar gelten Oberstoffe mit sehr glatter und/oder beschichteter und/oder flüssigkeitsabweisender und/oder dicht geschlagener Oberfläche, da sie mit den bekannten Klebemassen auf Basis thermoplastischer Schmelzkleber auf der Grundlage von Co-Polyamid-, Co-Polyester- oder Polyethylenpulvern mindestens in einem Punkt der nachfolgend genannten Eigenschaften wie ausreichende Haftung (Trennkraft), Pflegebeständigkeit, Optik oder Haptik keine zufriedenstellenden Ergebnisse aufweisen. Bei den oben genannten Stoffen ist die Trennkraft und Pflegebeständigkeit problematisch. Viele glatte Stoffe aus Nylon oder Seide sowie wasserabweisend beschichteten Oberstoffe, wie sie zum Beispiel für Regenjacken oder als Lederimitate verwendet werden, gelten als schwer fixierbar.

Aber auch sehr dünne, leichgewichtige Oberstoffe, die zumeist eine offene, löchrige, durchbrochene Materialstruktur aufweisen gelten als schwer fixierbar. Dazu gehören Chiffonstoffe, offen gewebte Baumwoll- oder Leinenstoffe. Die Problematik bei diesen Stoffen mit den bekannten thermoplastischen Schmelzklebern auf Basis von Co-Polyamid-, Co-Polyester- oder Polyethylenpulvern ist, daß die Klebemasse bei der Fixierung mit dem Einlagestoff, die unter Druck- und Temperatureinwirkung erfolgt, durch den Oberstoff beziehungsweise durch dessen Löcher schlägt und dort nach dem Abkühlen sichtbar und als Verhärtung spürbar ist. Die bekannten Schmelzkleber verursachen auf der Außenseite des Oberstoffes ein Glitzern oder es wird der Schmelzklebepunkt als Farbunterschied oder Verschmutzung auf dem Oberstoff sichtbar.

Die vorstehend beschriebenen Oberstoffe sind also mit den bekannten Klebemassen nicht mit zufriedenstellender Optik und Haptik bei gleichzeitiger guter Haftung (Trennkraft) und Pflegebeständigkeit (Trennkraft nach der Wäsche bei 60°C und chemischer Reinigung) von mindestens 1,5 N gemessen nach DIN 54310:1980 mit Abweichungen in der Probengröße (Prüfprobe 150 mm x 50 mm; Prüfstoff 160 mm x 60 mm) und einer Abzugsgeschwindigkeit von 150 mm/min, nach der Fixierung bei 120°C, 12 s, 2,5 bar auf einer Fixierpresse vom Typ Veit-Kannegießer Multistar DX 1000 C/T/TA fixierbar.

Die Herstellung und Verarbeitung dreidimensionaler Halbteile, wie Placks, die in Herrensakkos zum Einsatz kommen, ist mit klassischen schmelzklebebeschichteten Einlagen oft mit unbefriedigendem Ergebnis und einem sehr aufwendigen Verfahren möglich. Für die Verarbeitung muß die Einlage zunächst thermisch in einer Fixierpresse flach und eben liegend fixiert werden. Wegen der speziellen Faserzusammensetzung und der dicht geschlagenen Oberfläche sind die bei Placks erreichbaren Trennkräfte oft unzureichend. Die Einlage kann sich in der Pflege oder beim Dämpfen ablösen, was zu Anwendungsproblemen führt. Daher werden zur Herstellung von Placks oft Näheinlagen verwendet, die über Nähte befestigt werden oder es werden bei Verwendung von Schmelzklebereinlagen zusätzliche Nähprozesse zur Fixierung der Einlage durchgeführt. Das Anbringen der Nähte ist aufwendig, außerdem können die Nähte auftragen oder Falten werfen, was zu einer unvorteilhaften Optik des Halbteils führt. Nach dem Fixieren der Einlage muß außerdem zur Herstellung des Placks ein zusätzlicher Arbeitsgang auf einer Formpresse erfolgen, in dem das Halbteil - zumeist durch Aufdämpfen - in seine dreidimensionale Form gebracht wird. Dieses mehrstufige Arbeitsverfahren ist kostenintensiv und führt dennoch oft nicht zu einem einwandfreien Resultat. Bei Pflegebehandlung - insbesondere nach chemischer Reinigung - ist die Formbeständigkeit klassisch mit schmelzkleberbeschichteten Einlagen fixierter Placks unzureichend. Sie verlieren bei der chemischen Reinigung ihre dreidimensionale Form, was für die Optik und Qualität des fertigen Kleidungsstücks nachteilig ist.

Der Erfindung liegt die Aufgabe zugrunde, eine Klebemasse für eine heißsiegelfähige Einlage und eine mit dieser Klebemasse ausgestattete Einlage bereitzustellen, die beim thermischen Fixieren mit schwer fixierbaren Stoffen unter den für Schmelzklebereinlagen üblichen Konditionen eine gute Optik und Haptik bei gleichzeitig guter Trennkraft auch nach Pflegebehandlungen, wie Waschen bei 60°C und chemischer Reinigung, gewährleistet. Die Klebemasse soll insbesondere auch nach dem Fixieren auf der Außenseite des Oberstoffs nicht sichtbar oder als Verhärtung spürbar sein. Außerdem soll die mit der erfindungsgemäßen Klebemasse ausgestattete Fixiereinlage gut verarbeitbar und positionierbar sein.

Insbesondere sollte für Placks eine Möglichkeit bereitgestellt werden, diesen durch die Verwendung von Einlagen, die mit der erfindungsgemäßen Klebemasse ausgestattet sind, eine ausreichende Trennkraft und eine bessere Optik zu verleihen und das Herstellungsverfahren für Placks zu vereinfachen.

Die Aufgabe der vorliegenden Erfindung wird mit einer Klebemasse mit allen Merkmalen des Patentanspruchs 1 gelöst. Eine mit dieser Klebemasse ausgestattete Fixiereinlage sowie ein Verfahren zur Fixierung der Einlage werden in den Patentansprüchen 5 und 8 beschrieben. Die Unteransprüche betreffen vorteilhafte Ausgestaltungen der Erfindung.

Gemäß der Erfindung zeichnet sich eine Klebemasse für heißsiegelfähige Einlagen, die einen thermoplastischen Schmelzkleber (Komponente (A)) enthält, dadurch aus, dass sie als weitere Komponente einen bei Raumtemperatur klebrigen Haftklebstoff (Pressure Sensitive Adhesive) (Komponente (B)) enthält, wobei der Anteil der Komponente (A) 5 bis 40 Gew.-%, vorzugsweise 10 bis 30 Gew.-%, bezogen auf das Gesamtgewicht der alle Komponenten umfassenden ungetrockneten Klebemasse, und der Anteil der Komponente (B) 30 Gew.-% flüssig bis 95 Gew.-% flüssig, vorzugsweise 50 Gew.-% flüssig bis 90 Gew.-% flüssig, bezogen auf das Gesamtgewicht der alle Komponenten umfassenden ungetrockneten Klebemasse beträgt.

Der thermoplastische Schmelzkleber (Komponente (A)) ist bei Raumtemperatur nicht klebrig.

Haftklebstoffe an sich und ihre Eigenschaften sind bekannt und beispielsweise in Dieter Distler, "Wäßrige Polymerdispersionen, Synthese, Eigenschaften und Anwendungen", Wiley-VCH GmbH & CoKGA, Weinheim, 1999, Kapitel 7 bis 7.2, Seiten 125 bis 150 beschrieben. Im Allgemeinen werden Haftklebstoffe bei Raumtemperatur unter Druck mit Substraten, die zumeist nicht textiler Natur sind, verklebt. Sie werden üblicherweise auf Papier oder Folien aufgetragen und so zum Beispiel als selbstklebende Etiketten oder Klebefilme eingesetzt. Sie sind in der Regel bei Raumtemperatur schwach bis stark klebrig. Die Verklebung erfolgt bei den bekannten Anwendungen nur unter Einwirkung von Druck ohne Hitzeanwendung.

Haftklebstoffe an sich sind für den Einsatz als Klebemassen für heißsiegelfähige Einlagestoffe nicht geeignet. Es wäre zu erwarten, dass Einlagestoffe mit Haftklebstoffen als Haftmassen in den gewünschten Eigenschaften, wie Trennkraft, Waschbeständigkeit, chemische Reinigungsbeständigkeit, Optik und Haptik nur unzureichende Ergebnisse erhalten. Es wäre insbesondere zu erwarten, dass bei der Wäsche und/oder der chemischen Reinigung die Hafteigenschaften derartiger Klebemassen unzureichend sind, so dass sie sich nach diesen Behandlungen vom Oberstoff ablösen oder die Einlage verrutschen würden, was für die Anwendungen im Textilbereich nicht akzeptabel ist. Unter Hitzeeinwirkung etwa bei Temperaturen, die für die Fixierung textiler Oberstoffe gebräuchlich sind, werden die Haftklebstoffe dünnflüssig und würden durch die zu fixierenden Oberstoffe auf deren Außenseite durchschlagen. Sie wären nach der Fixierung sichtbar oder spürbar, so dass das optische und haptische Ergebnis nach der Fixierung nicht zufriedenstellend wäre. Des Weiteren müssen stark klebende Haftstoffe zum Schutz vor Verschmutzung mit einem Abdeckmaterial versehen werden, das bei der Verarbeitung wieder entfernt werden muss. Durch diesen Entfernungsschritt und der großen Klebrigkeit wären sie auf dem Oberstoff schlecht positionierbar und damit schlecht zu verarbeiten und könnten für heißsiegelfähige Einlagen, insbesondere für solche, die für eine Verklebung mit sehr dünnen, leichtgewichtigen textilen Substraten, sowie für solche mit löchriger Materialstruktur konzipiert sind, nicht eingesetzt werden.

Überraschenderweise wurde nun gefunden, dass Klebemassen bestehend aus einem bei Raumtemperatur nicht klebrigen thermoplastischen Schmelzkleber und als aktivem Bestandteil einem bei Raumtemperatur klebrigen Haftklebstoff als Haftmassen für heißsiegelfähige Einlagestoffe geeignet sind, die insbesondere auch bei den oben genannten schwierigen textilen Substraten erfolgreich einsetzbar sind.

Besonders überraschend ist hierbei, dass sich aus speziell ausgewählten wässrigen Polymerdispersionen/Polymeremulsionen aus der Gruppe der Haftklebstoffe unter Zusatz weiterer thermoplastischer Schmelzkleber auf Basis von Co-Polyamid-, Co-Polyester- oder Polyethylenpulver eine heißsiegelfähige Klebemasse für Fixiereinlagen hergestellt werden kann, die sich trotz des hohen Anteils von 30 Gew.-% flüssig und mehr an Haftklebstoffkomponente (bezogen auf das Gesamtgewicht der alle Komponenten umfassenden ungetrockneten Klebemasse) unter den für Heißsiegeleinlagen üblichen Konditionen (Druck, Zeit, Temperatur) mit dünnen, leichtgewichtigen textilen Oberstoffen sowie solchen mit löchriger Materialstruktur mit guter Trennkraft auch nach Wäsche und chemischer Reinigung bei guter Optik und Haptik ohne Sichtbarkeit und Spürbarkeit der Klebemasse nach Fixierung auf dem Oberstoff verkleben lässt und auf den Oberstoffen außerdem auch gut positionierbar und verarbeitbar ist. Außerdem konnte gezeigt werden, dass auch bei Verwendung eines bei Raumtemperatur stärker klebenden Haftklebstoffes gut verarbeitbare Klebemassen herstellbar sind, die nur schwach klebend sind und daher gut positionierbar sind. Dies gelingt insbesondere dann, wenn thermoplastisches Schmelzklebepulver vor dem Trocknen auf einen den Haftklebstoff und gegebenenfalls weiteres Schmelzklebepulver enthaltenden Pastenpunkt aufgestreut wird und die Klebemasse danach getrocknet wird.

Weiterhin schlagen die erfindungsgemäßen Klebemassen, auch wenn sie mit Haftkleberkomponente B eine bei Hitzeeinwirkung erweichende, üblicherweise sehr dünnflüssige, wässrige Polymerdispersion/Polymeremulsion enthalten, beim Fixieren bei der für Fixiereinlagen üblichen höheren Temperaturen nicht oder kaum auf die Außenseite des Oberstoffes durch. Dadurch ergibt sich mit der erfindungsgemäßen Fixiereinlage auf der Außenseite des Oberstoffes keine Griffverhärtung und es werden gute optische und haptische Ergebnisse erzielt.

Wegen der zumindest schwachen Klebrigkeit der Haftkleberkomponenten wäre ein Verkleben der Auftragseinheit/Auftragsaggregate zu erwarten gewesen, was zu einem ungleichmäßigen Auftrag und Defiziten in Trennkraft und Optik des fixierten Kleidungsstücks nach der Pflegebehandlung, zum Beispiel Blasenbildung, führt. Die erfindungsgemäße Klebemasse lässt sich tatsächlich jedoch trotz des hohen Anteils an Haftklebekomponente bei Raumtemperatur als wässrige Paste gut und gleichmäßig auf die Trägerbahn auftragen.

Trotz eines maximalen Schmelzklebergehalts von 40Gew% bezogen auf das Gesamtgewicht der alle Komponenten umfassenden ungetrockneten Klebemasse ist die erfindungsgemäße Klebemasse auch nach der Fixierung mit Oberstoffen mit löchriger Materialstruktur, insbesondere wenn sie durch den Zusatz von Pigmenten an den Farbton des Oberstoffes angeglichen wird, nicht sichtbar und ist auf der Außenseite des Oberstoffes nicht als ein Glitzern, einen Farbunterschied, eine Verklebung oder Erhebung zu erkennen.

Die erfindungsgemäße Klebemasse ist bei sachgemäßer thermischer Fixierung ausreichend fest mit dem Trägermaterial und dem Oberstoff verbunden, so dass es bei Pflegebehandlungen, wie Wäsche und chemischer Reinigung nicht zum Verrutschen oder dem Ablösen der Einlage kommt.

Die erfindungsgemäße Einlage ist gegenüber bekannten Schmelzklebereinlagen bei niedrigeren Temperaturen, Drucken und/oder Verweilzeiten fixierbar, so dass sie sich insbesondere für die Verwendung bei temperatur- und druckempfindlichen Substraten, insbesondere genarbte Leder und Kunstleder eignet.

Die erfindungsgemäße Einlage ist gut positionierbar und leichter und vielfältiger als schmelzkleberbeschichtetes System einsetzbar und verarbeitbar, da sie vor der thermischen Fixierung über den Haftkleber an den Oberstoff angeheftet werden kann und so bei der Verarbeitung nicht verrutscht.

Die erfindungsgemäße Einlage bietet vielfältigere Verarbeitungsmöglichkeiten; im Gegensatz zu bekannten schmelzkleberbeschichteten Einlagen ist die erfindungsgemäße Einlage, weil haftend, nicht nur eben und flach liegend, sondern auch dreidimensional, zum Beispiel auf Formpressen wie einer Muldenpresse oder auf einer Dampfpuppe fixierbar. Dadurch ergeben sich neue Design- und Einsatzmöglichkeiten, z.B. bei Schulterpolstern, BH-Cups, Placks, Performati.

Außerdem ist die erfindungsgemäße Einlage bei der thermischen Fixierung mit dem Oberstoff formstabil, schrumpft nicht stärker als der Oberstoff und kann auch nicht verrutschen, so dass eine einfachere Verarbeitung mit weniger Ausschuss möglich ist.

Darüber hinaus ist die erfindungsgemäße Klebemasse einfach und mit nur wenigen Rohstoffen kostengünstig herstellbar. Eine nur aus Verdickungsmittel, Haftklebstoff und Schmelzkleber hergestellte Klebemasse ergibt auch ohne die bei Schmelzkleberpasten üblichen Zusatzstoffe, wie Weichmacher, Ammoniak, Laufhilfsmittel hervorragende Ergebnisse.

Die mit der erfindungsgemäßen Klebemasse beschichteten Einlagen ermöglichen insbesondere für Placks eine einfachere Herstellung bei gleichzeitiger guter Trennkraft und verbesserter Optik des fertigen Bekleidungsstücks. So lässt sie sich bereits bei Raumtemperatur auf einfache Weise, z.B. durch Andrücken mit der Hand über den Haftkleber auf dem Plack befestigen und kann danach über eine Formpresse mit guter Trennkraft fixiert werden. Die mit der erfindungsgemäßen Klebemasse beschichtete Einlage muss also nicht, wie die klassischen Schmelzklebereinlagen liegend fixiert werden, sondern sie kann, da sie über den Haftkleber an dem Plack befestigt ist und somit nicht verrutschen kann, in der dreidimensionalen Endform im Zuge des Formdämpfens fixiert werden. Ein separater Fixierschritt, wie mit den klassischen schmelzkleberbeschichteten Einlagen, ist also nicht erforderlich. Da die Einlage eine gute Haftung aufweist, sind Nähte, die aufwendig anzubringen sind und die Optik des fertigen Teils stören können, nicht erforderlich. Ein Plack, der mit Einlagen, die mit der erfindungsgemäßen Klebemasse ausgestatte worden sind, hergestellt wurde, weist eine hervorragende Beständigkeit seiner dreidimensionalen Form nach Pflegebehandlungen, insbesondere nach chemischer Reinigung auf.

Die Klebemasse ist vorzugsweise eine wässrige, pastöse Dispersion, die den aktiven Bestandteil bezogen auf das Gesamtgewicht der alle Komponenten umfassenden ungetrockneten Klebemasse zu 30 Gew.-% flüssig bis 95 Gew.-% flüssig, vorzugsweise 50 Gew.-% flüssig bis 90 Gew.-% flüssig enthält. Der aktive Bestandteil ist bevorzugt eine wässrige Polymeremulsion oder Polymerdispersion, die aus der Gruppe der synthetischen Haftklebstoffe ausgewählt wird und Zusatzmittel, wie beispielsweise Vernetzungsmittel, Harze, Netzmittel, Verdickungsmittel und/oder Weichmacher enthalten kann.

Die Klebemasse enthält neben der wässrigen Polymerdispersion und/oder Polymeremulsion als zusätzliche separate Schicht und/oder eingemischt einen Zusatz von 5 Gew.-% bis 40 Gew.%, vorzugsweise 10 Gew.% bis 30 Gew.-% bezogen auf das Gesamtgewicht der alle Komponenten umfassenden ungetrockneten Klebemasse eines thermoplastischen Schmelzklebers, der vorzugsweise aus der Gruppe bestehend aus Co-Polyester und/oder Co-Polyamideund/oder Polyolefine ausgewählt wird. Besonders bevorzugt wird der thermoplastische Schmelzkleber als Pulver vor dem Trocknen der Klebemasse auf einen den Haftklebstoff und gegebenenfalls weiteren thermoplastischen Schmelzkleber enthaltenden Pastenpunkt aufgestreut.

Die wäßrige Polymerdispersion und/oder Polymeremulsion wird aus der Gruppe der synthetischen Haftklebstoffe speziell ausgewählt. Es werden aus dieser Gruppe vorzugsweise Acrylat-Polymere und Acrylat-Copolymere, Polymerisate und Copolymerisate auf Basis von Acrylsäureester, Vinylacetat, Ethylen, Styrol-Butadien-Copolymere oder Polyurethan-Haftklebstoffe oder deren Mischungen verwendet, die bei Raumtemperatur haftend, klebrig oder schwach klebrig sind und beim Verkleben mit textilen Substraten unter den für Schmelzkleber üblichen Fixierbedingungen eine dauerhafte, bei 60 °C waschbeständige oder gegenüber chemischer Reinigung beständige Verbindung mit einer Trennkraft von mindestens 1,5 N, gemessen nach DIN 54310:1980 mit Abweichungen in der Probengröße (Prüfprobe 150 mm x 50 mm, Prüfstoff 160 mm x 60 mm) und einer Abzugsgeschwindigkeit von 150 mm/min nach Fixierung mit einer Fixierpresse Veit-Kannegießer Multistar DX 1000/C/T/TA eingehen. Besonders bevorzugt sind Haftklebstoffe auf Basis von Styrol-Butadien-Copolymeren und/oder Acrylsäureester-Copolymeren.

Die erfindungsgemäße Klebemasse oder die als wässrige Polymerdispersion oder Polymeremulsion vorliegende Haftklebstoffkomponente B, auf die gegebenenfalls thermoplastischer Schmelzkleber aufgebracht wird, kann verdickt als Paste auf den Einlagestoffträger aufgetragen werden. Das Verdicken kann unter Verwendung eines Verdickungsmittels erfolgen. Die Viskosität der Paste nach Brookfield liegt bei 20 °C bei 25.000 bis 100.000 cp.

Die Klebemasse wird vorzugsweise im Pastendruckverfahren als Pastenpunkt oder als Unterpunkt einer Doppelpunkttechnik auf die Trägerstoffbahn aufgebracht.

Die Trägerstoffbahn, auf die die Klebemasse aufgebracht wird, ist vorzugsweise ein textiles Flächengebilde, besonders bevorzugt ein Vliesstoff, ein Gewebe oder ein Gewirke.

Nach dem Aufbringen auf die Trägerstoffbahn wird das Wasser aus der Klebemasse entfernt. Vorzugsweise geschieht das Entfernen des Wassers durch einen Trocknungsprozeß in einem Heißlufttrockner für 10 bis 120 s bei 80°C bis 190°C.

In einer bevorzugten Ausführungsform der Erfindung ist die Klebemasse mit einem Pigment oder einem Farbstoff des zu fixierenden Oberstoffes eingefärbt.

In einer bevorzugten Ausführungsform wird der thermoplastische Schmelzkleber als Pulver vor dem Trocknen der Klebemasse auf einen den Haftklebstoff und gegebenenfalls weiteren thermoplastischen Schmelzkleber enthaltenden Pastenpunkt aufgestreut.

Nach dem Trocknen ist die Klebemasse haftend. Die mit dieser Klebemasse beschichtete Trägerstoffbahn wird nach dem Trocknen, gegebenenfalls unter Verwendung einer Abdeckung, wie zum Beispiel einem Releasepapier, das zum Schutz auf die Klebemassenschicht aufgebracht wird, aufgerollt.

In einer besonders bevorzugten Ausführungsform weist die Trägerstoffbahn auf der nicht mit der Klebemasse ausgestatteten Seite eine hohe Oberflächenglätte auf, so daß auf die Abdeckung verzichtet werden kann.

Der Anteil der Klebemasse bezogen auf das Gesamtgewicht der Fixiereinlage nach dem Trocken, d.h. nach dem Abdampfen des Wassers und einer 24stündigen Klimatisierung bei 20°C und einer relativen Luftfeuchtigkeit von 50% liegt bei 10 Gew.-% bis 80 Gew.-%.

Die Klebemasse enthält neben dem Haftklebstoff und gegebenenfalls thermoplastischen Schmelzkleber vorzugsweise unter 5%, maximal unter 25% weitere Bestandteile, wie Verdickungsmittel, Pigmente, Laufhilfsmittel, die keinen Beitrag zur Haftung bzw. Trennkraft leisten.

Diese Klebemasse erweicht unter den vorherbestimmten und auf die Anwendung eingestellten Fixierbedingungen. Beim Verkleben der mit der erfindungsgemäßen Klebemasse ausgestatteten Einlage mit textilen Substraten, unter den für Schmelzkleber üblichen Fixierbedingungen wird eine dauerhafte, bei 60°C waschbeständige und chemisch reinigungsbeständige Verbindung mit einer Trennkraft von mindestens 1,5 N erreicht, die nach DIN 54310:1980 mit Abweichungen in der Probengröße (Prüfprobe 150 mm x 50 mm, Prüfstoff 160 mm x 60 mm) und einer Abzugsgeschwindigkeit von 150 mm/min nach Fixierung mit einer Fixierpresse Veit-Kannegießer Multistar DX 1000/C/T/TA gemessen wird.

Die erfindungsgemäße Fixiereinlage wird unter den für Heißsiegeleinlagen gebräuchlichen Fixierkonditionen, das heißt bei Temperaturen im Bereich von 60°C bis 165°C, einem Druck im Bereich von 0 N/m² bis 8x10⁵ N/m² auf den bekannten Fixieranlagen fixiert.

### Beispiele

Nachfolgend wird die Herstellung der erfindungsgemäßen Klebemasse sowie damit beschichtete Einlagen anhand von Beispielen näher beschrieben.

### Beispiel 1

Zu 150 g Wasser werden bei Raumtemperatur 290 g (= 56 Gew.-% bezogen auf das Gesamtgewicht der alle Komponenten umfassenden ungetrockneten Klebemasse) einer wässrigen Dispersion eines Polymers auf Basis eines selbstvernetzenden Styrol-Acrylat-Copolymers mit einer Glastemperatur von Tg=2°C, einem Feststoffgehalt von 60% und einer leichten Klebrigkeit, als Haftklebstoff gegeben. In die Mischung werden unter Rühren 1,5 g eines schwarzen Pigments auf Rußbasis und 60 g (=11,6 Gew.-% bezogen auf das Gesamtgewicht der alle Komponenten umfassenden ungetrockneten Klebemasse) eines Schmelzklebers auf Basis eines Co-Polyamids (Schmelzbereich 90 bis 160°C) gegeben. Danach werden 15 g eines Copolymerisats aus Polyacrylat/Acrylamid als wäßrige Dispersion mit einem Festgehalt von 33% als Verdickungsmittel eingerührt. Nach einer Rührzeit von 30 Minuten und einer Reifezeit von 24 Stunden wird die Paste im Pastendruckverfahren (Rotationsfilmdruck) mittels eines Rakels durch eine perforierte Schablone (CP 180, Lochdurchmesser 0,43 mm) auf einen Trägerstoff aufgedruckt, bei dem es sich um einen im PS-Verfahren thermisch verfestigten Stapelfaservliesstoff mit einem Flächengewicht von 24 g/m² handelt, der aus 65 % Polyamidfasern und 35 % Polyesterfasern besteht. Der bedruckte Vliesstoff wird 60 Sekunden bei 130°C in einem Umluftofen getrocknet. Die Auflage der Klebemasse nach dem Trocknen beträgt 25 g/m².

### Beispiel 2

Zu 150 g Wasser werden bei Raumtemperatur 290 g (= 56 Gew.-% bezogen auf das Gesamtgewicht der alle Komponenten umfassenden ungetrockneten Klebemasse) einer Emulsion eines Polymers auf Basis eines carboxyl-modifizierten Acrylpolymers mit einer Glastemperatur von Tg=-30°C, einem Feststoffgehalt von 55% und einer leichten Klebrigkeit, als Haftklebstoff gegeben. In die Mischung werden unter Rühren 60 g (=11,6 Gew.-% bezogen auf das Gesamtgewicht der alle Komponenten umfassenden ungetrockneten Klebemasse) eines Schmelzklebers auf Basis eines Co-Polyamids (Schmelzbereich 90 bis 160°C) gegeben. In die Mischung werden 15 g eines Copolymerisats aus Polyacrylat/Acrylamid als wäßrige Dispersion mit einem Festgehalt von 33% als Verdickungsmittel eingerührt. Nach einer Rührzeit von 30 Minuten und einer Reifezeit von 24 Stunden wird die Paste im Pastendruckverfahren (Rotationsfilmdruck) mittels eines Rakels durch eine perforierte Schablone (CP 180, Lochdurchmesser 0,43 mm) auf einen Trägerstoff aufgedruckt, bei dem es sich um einen im PS-Verfahren thermisch verfestigten Stapelfaservliesstoff mit einem Flächengewicht von 24 g/m² handelt, der aus 65 % Polyamidfasern und 35 % Polyesterfasern besteht. Der bedruckte Vliesstoff wird 60 Sekunden bei 130°C in einem Umluftofen getrocknet. Die Auflage der Klebemasse nach dem Trocknen beträgt 20 g/m².

### Beispiel 3

Zu 75 g Wasser werden bei Raumtemperatur 145 g (= 50 Gew.-% bezogen auf das Gesamtgewicht der alle Komponenten umfassenden ungetrockneten Klebemasse) einer wässrigen Dispersion eines Copolymers auf Basis eines Acrylsäureesters (mit einer Glastemperatur von Tg=-43°C (DSC), Mindestfilmbildetemperatur ca. <1°C, DIN ISO 2115, einem Feststoffgehalt von 69% und einer hohen Klebrigkeit) als Haftklebstoff gegeben. In die Mischung werden unter Rühren 2 g eines schwarzen Pigments auf Rußbasis und 60 g (=20,6 Gew.-% bezogen auf das Gesamtgewicht der alle Komponenten umfassenden ungetrockneten Klebemasse) eines Schmelzklebers auf Basis eines Co-Polyamids (Schmelzbereich 90 bis 160°C) gegeben. Danach werden in die Mischung 8,5 g eines Copolymerisats aus Polyacrylat/Acrylamid als wäßrige Dispersion mit einem Festgehalt von 33% als Verdickungsmittel eingerührt. Nach einer Rührzeit von 30 Minuten und einer Reifezeit von 24 Stunden wird die Paste im Pastendruckverfahren (Rotationsfilmdruck) mittels eines Rakels durch eine perforierte Schablone (CP 180, Lochdurchmesser 0,43 mm) auf einen Trägerstoff aufgedruckt, bei dem es sich um einen im PS-Verfahren thermisch verfestigten Stapelfaservliesstoff mit einem Flächengewicht von 24 g/m² handelt, der aus 65 % Polyamidfasern und 35 % Polyesterfasern besteht. Der bedruckte Vliesstoff wird 90 Sekunden bei 130°C in einem Umluftofen getrocknet. Die Auflage der Klebemasse nach dem Trocknen beträgt 20 g/m².

### Beispiel 4

Zu 75 g Wasser werden bei Raumtemperatur 145 g (= 63 Gew.-% bezogen auf das Gesamtgewicht der alle Komponenten umfassenden ungetrockneten Klebemasse) einer wässrigen Dispersion eines Copolymers auf Basis eines Acrylsäureesters mit einer Glastemperatur von Tg=-43°C (DSC), Mindestfilmbildetemperatur ca. <1°C, DIN ISO 2115, einem Feststoffgehalt von 69% und einer hohen Klebrigkeit, als Haftklebstoff gegeben. In die Mischung werden Mischung 8,5 g eines Copolymerisats aus Polyacrylat/Acrylamid als wäßrige Dispersion mit einem Festgehalt von 33% als Verdickungsmittel eingerührt. Nach einer Rührzeit von 30 Minuten und einer Reifezeit von 24 Stunden wird die Paste im Pastendruckverfahren (Rotationsfilmdruck) mittels eines Rakels durch eine perforierte Schablone (CP 180, Lochdurchmesser 0,43 mm) auf einen Trägerstoff aufgedruckt, bei dem es sich um einen im PS-Verfahren thermisch verfestigten Stapelfaservliesstoff mit einem Flächengewicht von 24 g/m² handelt, der aus 100 % Polyesterfasern besteht. Die Auflage des noch feuchten Pastenpunkts beträgt 44 g/m². Anschließend wird auf den noch feuchten Pastenpunkt als thermoplastische Schmelzkleberkomponente ein pulverförmiges thermoplastisches Co-Polyamid (Schmelzbereich 90 bis 160°C) aufgestreut. Der Vliesstoff wird sanft abgeklopft, um das nicht am Pastenpunkt anhaftende überschüssige Pulver zu entfernen. Die Auflage der thermoplastischen Schmelzkleberkomponente beträgt 5 g/m² (=10 Gew.-% bezogen auf das Gesamtgewicht der alle Komponenten umfassenden ungetrockneten Klebemasse). Der bedruckte Vliesstoff wird 90 Sekunden bei 130°C in einem Umluftofen getrocknet. Die Auflage der Klebemasse nach dem Trocknen beträgt 25 g/m².

### Beispiel 5

Zu 75 g Wasser werden bei Raumtemperatur 145 g (=49 Gew.-% bezogen auf das Gesamtgewicht der alle Komponenten umfassenden ungetrockneten Klebemasse) einer wäßrigen Dispersion eines Copolymers auf Basis eines Acrylsäureesters mit einer Mindestfilmbildetemperatur ca. 0°C, DIN 53787, einem Feststoffgehalt von 60% und einer hohen Klebrigkeit, sowie als thermoplastische Schmelzkleberkomponente 70 g (=23,4 Gew.-% bezogen auf das Gesamtgewicht der alle Komponenten umfassenden ungetrockneten Klebemasse) eines pulverförmigen thermoplastischen Co-Polyamids (Schmelzbereich 90 bis 160°C) unter Rühren zugegeben. In die Mischung werden 8,5 g eines Copolymerisats aus Polyacrylat/Acrylamid als wäßrige Dispersion mit einem Festgehalt von 33% als Verdickungsmittel eingerührt. Nach einer Rührzeit von 30 Minuten und einer Reifezeit von 24 Stunden wird die Paste im Pastendruckverfahren (Rotationsfilmdruck) mittels eines Rakels durch eine perforierte Schablone (CP 180, Lochdurchmesser 0,43 mm) auf einen Trägerstoff aufgedruckt, bei dem es sich um einen im PS-Verfahren thermisch verfestigten Stapelfaservliesstoff mit einem Flächengewicht von 17 g/m² handelt, der aus 85 % Polyamidfasern und 15 % Polyesterfasern besteht. Der bedruckte Vliesstoff wird 90 Sekunden bei 130°C in einem Umluftofen getrocknet. Die Auflage der Klebemasse nach dem Trocknen beträgt 20 g/m². Die Fixierschicht des so entstandenen Einlagestoffs wird mit einem beidseitig mit Silikon beschichteten Papier abgedeckt.

### Beispiel 6

Zu 150 g Wasser werden bei Raumtemperatur 290 g (= 50 Gew.-% bezogen auf das Gesamtgewicht der alle Komponenten umfassenden ungetrockneten Klebemasse) einer wässrigen Dispersion eines Copolymers auf Basis eines Acrylsäureesters mit einer Glastemperatur von Tg -43°C (DSC), Mindestfilmbildetemperatur ca. <1°C, DIN ISO 2115, einem Feststoffgehalt von 69% und einer hohen Klebrigkeit, als Haftklebstoff gegeben. In die Mischung werden unter Rühren 120 g (=21 Gew.-% bezogen auf das Gesamtgewicht der alle Komponenten umfassenden ungetrockneten Klebemasse) eines Schmelzklebers auf Basis eines Co-Polyamids (Schmelzbereich 90 bis 160°C) zugegeben. Danach werden in die Mischung 15 g eines Copolymerisats aus Polyacrylat/Acrylamid als wäßrige Dispersion mit einem Festgehalt von 33% als Verdickungsmittel eingerührt. Nach einer Rührzeit von 30 Minuten und einer anschließenden Reifezeit von 24 Stunden wird die Paste im Pastendruckverfahren (Rotationsfilmdruck) mittels eines Rakels durch eine perforierte Schablone (CP 20, Lochdurchmesser 0,8 mm) auf einen Trägerstoff aufgedruckt, bei dem es sich um ein Gewebe aus 100 % PES mit einem Flächengewicht von 44 g/m² handelt. Der bedruckte Vliesstoff wird 120 Sekunden bei 130°C in einem Umluftofen getrocknet. Die Auflage der Klebemasse nach dem Trocknen beträgt 30 g/m².

Die erfindungsgemäßen Fixiereinlagen der Beispiele 1 bis 6 und des Vergleichsbeispiels 1a werden auf einer Durchlauffixierpresse ((Veit-Kannegiesser Multistar DX 1000 C/T/TA, Baujahr 2005, Seriennummer DX 100045) bei einer Temperatur von 120°C, einem Druck von 2,5 bar (=2,5 x 10⁵ N/m²) während 12 Sekunden mit verschiedenen schwer fixierbaren Oberstoffen verklebt.

Bei Oberstoff 1 handelt es sich um ein Gewebe aus 100 % Polyester mit einem Flächengewicht von 23 g/m². Dieses Gewebe ist ein leichter, transparenter anthrazitfarbener Chiffonstoff mit löchriger Materialstruktur, in den Falten einfixiert sind.

Bei Oberstoff 2 handelt es sich um ein Gewebe aus 65 % Baumwolle und 35 % Polyester mit einem Flächengewicht von 175 g/m². Diese Gewebe ist stark wasserabweisend ausgerüstet.

Bei Oberstoff 3 handelt es sich um eine Gewebe in Form eines Placks mit 41,5 % Baumwolle; 4 % Wolle, 12 % Ziegenhaar, 38,5 % Viskose, 4 % Polyester, Kette: Baumwollen, Schuss: Wolle/ZiegenhaarNiskose/Polyester, Flächengewicht 220 g/m².

Die Trennkraft wird nach DIN 54310:1980 mit Abweichungen in der Probengröße (Prüfprobe 150 mm x 50 mm, Prüfstoff 160 mm x 60 mm) und einer Abzugsgeschwindigkeit von 150 mm/min nach Fixierung mit einer Fixierpresse Veit-Kannegießer Multistar DX 1000 C/T/TA gemessen. In Beispiel 6 wird die Trennkraft nach der Fixierung auf einer Dampfformpresse des Herstellers Hofmann Maschinen GmbH, Köln Mühlheim, Typ HR 2A-04-04/011E, mit einem Sattdampf bei 102 °C und 3 bar über 15 Sekunden gemessen.

Die Trennkraft nach der Wäsche wird gemessen nach DIN 54310:1980 mit Abweichungen in der Probengröße (Prüfprobe 150 mm x 50 mm, Prüfstoff 160 mm x 60 mm) und einer Abzugsgeschwindigkeit von 150 mm/min nach Fixierung mit einer Fixierpresse Veit-Kannegießer Multistar DX 1000/C/T/TA nach einer Haushaltswäsche nach EN ISO 6330:2000 (Verfahren 2A, 60°C). Zu Beispiel 6 ist zusätzlich die Trennkraft nach der Fixierung auf einer Dampfformpresse des Herstellers Hofmann Maschinen GmbH, Köln Mühlheim, Typ HR 2A-04-04/011E, mit einem Sattdampf bei 102 °C und 3 bar über 15 Sekunden angegeben.

Die Trennkraft nach chemischer Reinigung wird gemessen nach DIN 54310:1980 mit Abweichungen in der Probengröße (Prüfprobe 150 mm x 50 mm, Prüfstoff 160 mm x 60 mm) und einer Abzugsgeschwindigkeit von 150 mm/min nach Fixierung mit einer Fixierpresse Veit-Kannegießer Multistar DX 1000 C/T/TA sowie einer chemischen Reinigung nach DIN 54310:1980, DIN EN 3175-2:1998. In Beispiel 6 wird die Trennkraft nach der Fixierung auf einer Dampfformpresse des Herstellers Hofman Maschinen GmbH, Köln-Mülheim, Typ HR 2A-04-04/011 E, mit einem Sattdampf bei 102°C, 3 bar und 15 Sekunden gemessen. Spaltwerte, bei denen sich bei der Trennkraftprüfung ein Abriß des Trägermaterials ergibt, werden gegenüber Mittelwerten, bei denen sich die Haftmasse ablöst, ohne daß das Trägermaterial reißt, als bessere Haftungswerte eingestuft und bevorzugt.

Die Tabellen 1 und 2 zeigen die Trennkräfte nach dem Fixieren (Primärhaftung), nach einer Wäsche bei 60°C und nach chemischer Reinigung. Hierzu wurden die in den Beispielen 1 bis 6 mit erfindungsgemäßer Klebemasse hergestellten Fixiereinlagen getestet.

**Tabelle 1**

| | Trennkraft nach Fixieren* | Trennkraft nach Fixieren* und 1x Wäsche bei 60°C | Trennkraft nach Fixieren* und 1 x chemische Reinigung |
|---|---|---|---|
| Beispiel 1 Oberstoff 1 | 6,8 N Spalt | 3,6 N Mittelwert | 8,1 N Mittelwert |
| Vergleichsbeispiel 1a Oberstoff 2 | 5,1 N Mittelwert | 1,2 N Mittelwert | 1,3 N Mittelwert |
| Beispiel 2 Oberstoff 2 | 4,5 N Spalt | 3,5 N Mittelwert | 4,1 N Mittelwert |
| Beispiel 3 Oberstoff 2 | 14,7 N Spalt | 9,7 N Spalt | 9,2 N Spalt |
| Beispiel 4 Oberstoff 2 | 6,0 N Spalt | 10,0 N Mittelwert | 4,2 N Mittelwert |
| Beispiel 5 Oberstoff 2 | 7,3 N Spalt | 6,2 N Spalt | 3,8 N Spalt |
| Beispiel 6 Oberstoff 2 | 5,4 N Mittelwert | 4,1 N Mittelwert | 2,6 N Mittelwert |

| | | | |
|---|---|---|---|
| * Fixierung bei 2,5 bar, 120°C und 12 Sekunden | | | |

**Tabelle 2**

| | Trennkraft nach Fixieren* | Trennkraft nach Fixieren* und 1x Wäsche bei 60°C | Trennkraft nach Fixieren* und 1x chemische Reinigung |
|---|---|---|---|
| Beispiel 6 | 4,5 N Mittelwert | 3,1 N Mittelwert | 2,6 N Mittelwert |
| Oberstoff 3 | | | |

| | | | |
|---|---|---|---|
| * auf Dampfformpresse, Sattdampf, 3 bar, 15 Sekunden | | | |

### Vergleichsbeispiel 1a

Der Stapelfaservliesstoff mit einem Flächengewicht von 24 g/m² wird mit einer nach bisherigem Stand der Technik üblichen als Klebemasse nur Schmelzkleberpulver enthaltenden wässrigen Paste, die aus folgenden Komponenten besteht: 200 g Wasser, 300 g (=59 Gew.-% bezogen auf das Gesamtgewicht der alle Komponenten umfassenden ungetrockneten Paste) Co-Polyamidpulver, (Schmelzbereich 90 bis 160°C), 7g Verdicker, 1 g Natriumhydroxid bedruckt und danach 60 s bei 130°C im Umluftofen getrocknet. Die Auflage der Klebemasse nach dem Trocknen beträgt 25 g/m².

### Diskussion der Ergebnisse

Die mit der erfindungsgemäßen Klebemasse ausgestatteten Einlagestoffe gemäß den Beispielen 1 bis 6 ergeben nach Fixierung mit schwer fixierbaren Oberstoffen 1 bis 3 eine durchweg gute Haftung (Trennkraft) und Pflegebeständigkeit (Trennkraft nach 60°C Wäsche und chemischer Reinigung) von über 1,5 N, gemessen nach DIN 54310: 1980 mit Abweichungen in Probengröße (Prüfprobe: 160 mm X 5 mm, Prüfstoff 160 X 60 mm) nach Fixierung mit einer Fixierpresse Veit Kannegießer Multistar DX 1000 C/T/TA.

Dagegen ergibt eine Einlage nach dem bisherigen Stand der Technik gemäß Vergleichsbeispiel 1 a keine ausreichende Haftung (Trennkraft) nach chemischer Reinigung und Wäsche 60 °C nach Fixierung mit dem kritischen Oberstoff 2.

Die mit der erfindungsgemäßen Klebemasse ausgestatteten Einlagestoffe gemäß den Beispielen 1 bis 6 ergeben nach sachgemäßer Fixierung mit einem textilen Oberstoff eine gute Optik und Haptik. Die erfindungsgemäße Klebemasse nach Beispiel 1 schlägt selbst bei dem sehr dünnen und leichten Oberstoff 1 mit offener, löchriger Materialstruktur nicht durch die Löcher durch und ist nach dem Fixieren auf der Außenseite des Oberstoffs nicht als Glitzern oder Farbunterschied sichtbar. Eine Plackeinlage gemäß Besipiel 6 ist bei hervorragender Trennkraft und Pflegebeständigkeit leicht verarbeitbar, da sie bei Raumtemperatur in dreidimensionaler Form auf den Oberstoff angeheftet und im Zuge des Formdämpfens dauerhaft fixiert werden kann, so dass keine zusätzlichen Nähte zur Fixierung erforderlich sind. Sie ermöglicht die Herstellung von Placks, die nach Pflegebehandlung ihre dreidimensionale Form hervorragend halten.

## Patentansprüche

1. Klebemasse für heißsiegelfähige Einlagen umfassend einen bei Raumtemperatur nicht klebrigen thermoplastischen Schmelzkleber (Komponente (A)), **dadurch gekennzeichnet, dass** sie als weitere Komponente einen bei Raumtemperatur klebrigen Haftklebstoff (Pressure Sensitive Adhesive) (Komponente (B)) enthält, wobei der Anteil der Komponente (A) 5 bis 40 Gew.-%, vorzugsweise 10 bis 30 Gew.-%, bezogen auf das Gesamtgewicht der alle Komponenten umfassenden ungetrockneten Klebemasse, und
der Anteil der Komponente (B) bezogen auf das Gesamtgewicht der alle Komponenten umfassenden ungetrockneten Klebemasse 30 Gew.-% flüssig bis 95 Gew.-% flüssig, vorzugsweise 50 Gew.-% flüssig bis 90 Gew.-% flüssig beträgt.

2. Klebemasse nach Anspruch 1, **dadurch gekennzeichnet, daß**
die Komponente (A) ausgewählt wird aus der Gruppe Co-Polyester, Co-Polyamide und Polyolefine und
die Komponente (B) ausgewählt wird aus der Gruppe Acrylat-Polymere und Acrylat-Copolymere, Polymerisate und Copolymerisate auf Basis von Acrylsäureester, Vinylacetat, Ethylen, Styrol-Butadien-Copolymere oder Polyurethan-Haftklebstoffe oder deren Mischungen.

3. Klebemasse nach einem der Ansprüche 1 oder 2 **dadurch gekennzeichnet, daß** die Komponente (B) in Form einer wäßrigen Polymerdispersion und/oder Polymeremulsion verwendet wird.

4. Klebemasse nach einem der Ansprüche 1 bis 3, **dadurch gekennzeichnet, daß** sie unter 5 % bis maximal unter 25 % eines Zusatzmittel enthält, das ausgewählt aus der Gruppe der Vernetzungsmittel, Harze, Netzmittel, Verdickungsmittel, Weichmacher, Pigmente, Farbstoffe.

5. Einlage, die die Klebemasse nach einem der Ansprüche 1 bis 4 umfaßt.

6. Einlage nach Anspruch 5, wobei bezogen auf das Gesamtgewicht der alle Komponenten umfassenden ungetrockneten Klebemasse die Klebemasse 10 bis 30 Gew.-%, Co-Polyester und/oder Co-Polyamid und/oder Polyolefin und 30 Gew.-% flüssig bis 95 Gew.-% flüssig Styrol-Butadien-Copolymere und/oder Copolymerisate auf Basis von Acrylsäureester enthält.

7. Einlage nach Anspruch 6, die in verschiedenen Geweben, Gewirken oder Vliesstoffen sowie für Schulterpolster, BH-Cups, Placks verwendet wird.

8. Verfahren zur Fixierung einer mit der Klebemasse nach einem der Ansprüche 1 bis 4 ausgestatteten Einlage, umfassend die Schritte:
Aufbringen der Klebemasse auf eine Trägerbahn,
Entfernen des Wasser aus der Klebemasse mittels Heißluftrockens,
Fixieren der Einlage auf dem textilen Oberstoff mittels eines Drucks von 0 N/m² bis 8 x 10⁵ N/m² und einer Temperatur im Bereich von 60 bis 160°C über einen Zeitraum von 5 bis 120 Sekunden.

9. Verfahren nach Anspruch 8 umfassend den Schritt:
Abdeckung der getrockneten Klebemasse mit einer Folie oder einem Releasepapier,
Entfernen der Abdeckung vor der Fixierung der Einlage.

## Claims

1. Adhesive composition for heart-sealable interlinings comprising a room temperature non-tacky thermoplastic hotmelt adhesive (component (A)), **characterized in that** it further comprises a room temperature tacky pressure sensitive adhesive (component (B)), wherein the proportion of component (A) is 5 to 40 wt%, preferably 10 to 30 wt%, based on the overall weight of the undried adhesive composition comprising all components, and
the proportion of component (B) based on the overall weight of the undried adhesive composition comprising all components is 30 wt% liquid to 95 wt% liquid, preferably 50 wt% liquid to 90 wt% liquid.

2. Adhesive composition according to claim 1, **characterized in that**
component (A) is selected from the group: co-polyesters, co-polyamides and polyolefins, and component (B) is selected from the group: acrylate polymers and acrylate copolymers, chain growth addiction polymers and copolymers based on acrylic esters, vinyl acetate, ethylene, styrene-butadiene copolymers or pressure sensitive polyurethane adhesives or mixtures thereof.

3. Adhesive composition according to either of Claims 1 and 2, **characterised in that** component (B) is used in the form of an aqueous polymeric dispersion and/or polymeric emulsion.

4. Adhesive composition according to any of Claims 1 to 3, **characterized in that** it contains below 5% to not more than below 25% of an additive selected from the group of crosslinking agents, resigns, wetting agents, thickening agents, plasticizers, pigments, dyes.

5. Interlining comprising the adhesive composition according to any of Claims 1 to 4.

6. Interlining according to Claim 5, wherein, based on the overall weight of the undried adhesive composition comprising all components, the adhesive composition contains 10 to 30 wt% of co-polyester and/or co-polyamide and/or polyolefin and 30 wt% liquid to 95 wt% liquid, of styrene-butadiene copolymers and/or chain growth addition copolymers based on acrylic esters.

7. Interlining according to Claim 6, as used in various wovens, knits or nonwovens and also for shoulder pads, bra cups, canvasses.

8. Process for attaching an interlining endowed with the adhesive composition according to any of Claims 1 to 4, comprising the steps of:
applying the adhesive composition to a backing web,
removing the water from the adhesive composition by hot air drying,
attaching the interlining to the outer fabric by applying a pressure of 0 N/m² to 8 x 10⁵ N/m² and a temperature in the range from 60 to 160°C for a period of 5 to 120 seconds.

9. Process according to Claim 8, comprising the step of:
covering the dried adhesive composition with a foil or a release paper,
removing the covering before attaching the interlining.

## Revendications

1. Masse adhésive pour entoilages thermofusibles comprenant un adhésif fusible thermoplastique non collant à température ambiante (composant (A)), **caractérisée en ce qu'**elle continent comme autre composant un autoadhésif collant à température ambiante (Pressure Sensitive Adhesive) - adhésif sensible à la pression) (composant (B)), la proportion de composant (A) étant de 5 à 40% en poids, de préférence de 10 à 30% en poids, par rapport au poids total de la masse adhésive non séchée comprenant tous les composants, et la proportion de composant (B), par rapport au poids total de la masse adhésive non séchée comprenant tous les composants, étant de 30% en poids liquide à 95% en poids liquide, de préférence de 50% en poids liquide à 90% en poids liquide.

2. Masse adhésive selon la revendication 1, **caractérisée en ce que**
le composant (A) est choisi dans le groupe des copolyesters, des copolyamides et des polyoléfines et le composant (B) est choisi dans le groupe des polymères d'acrylate et des copolymères d'acrylate, des polymères et des copolymères à base d'esters de l'acide acrylique, d'acétate de vinyle, d'éthylène, des copolymères de styrène-butadiène ou des autoadhésifs de polyuréthane ou de leurs mélanges.

3. Masse adhésive selon l'une quelconque des revendications 1 ou 2, **caractérisée en ce que** le composant (B) est utilisé sous forme d'une dispersion aqueuse de polymère et/ou d'une émulsion aqueuse de polymère.

4. Masse adhésive selon l'une quelconque des revendications 1 à 3, **caractérisée en ce qu'**elle contient moins de 5% à au maximum moins de 25% d'un additif, qui est choisi dans le groupe des réticulants, des résines, des agents mouillants, des épaississants, des plastifiants, des pigments, des colorants.

5. Entoilage, qui comprend la masse adhésive selon l'une quelconque des revendications 1 à 4.

6. Entoilage selon la revendication 5, la masse adhésive contenant, par rapport au poids total de la masse adhésive non séchée comprenant tous les composants, 10 à 30% en poids de copolyester et/ou de copolyamide et/ou de polyoléfine et 30% en poids liquide à 95% en poids liquide de copolymères de styrène-butadiène et/ou de copolymères à base d'esters de l'acide acrylique.

7. Entoilage selon la revendication 6, qui est utilisé dans différents tissus, tricots ou non tissés ainsi que pour des épaulettes, des bonnets de soutien-gorge, des pattes de boutonnage.

8. Procédé pour fixer un entoilage apprêté par une masse adhésive selon l'une quelconque des revendications 1 à 4, comprenant les étapes consistant à :
appliquer la masse adhésive sur une bande support,
éliminer l'eau de la masse adhésive au moyen d'un séchoir à air chaud, fixer l'entoilage sur le tissu textile supérieur au moyen d'une pression de 0 N/m² à 8 x 10⁵ N/m² et à une température dans la plage de 60 à 160°C sur un laps de temps de 5 à 120 secondes.

9. Procédé selon la revendication 8, comprenant l'étape consistant à :
recouvrir la masse adhésive séchée par une feuille ou un papier antiadhésif,
éliminer le recouvrement avant la fixation de l'entoilage.
